# EUROPEAN PATENT APPLICATION

(11) **EP 4 764 981 A1**
(43) Date of publication of application: **24.06.2026**
(21) Application number: 25171516.5
(22) Date of filing: 20.04.2025
(51) Int. Cl.: G06N 20/00

(54) **RELIABILITY ASSESSMENT OF MACHINE LEARNING MODEL OUTPUTS**

(30) Priority: 21.12.2024 EP 24222688
(71) Applicant: Signaloid Limited, Cambridge, Cambridgeshire CB1 2GE (GB)
(72) Inventor: Stanley-Marbell, Phillip, Cambridge, CB3 1BQ (GB)
(74) Representative: Legl, Stefan

(57) **Abstract**

The present disclosure relates to a computer-implemented method for assessing reliability of outputs from machine learning models, comprising:
- generating, by a first machine learning model, a sequence of items, wherein each item is selected from a corresponding set of candidate items based on at least one selection criterion, wherein each candidate item of a set of candidate items is associated with probability information; and
- performing, by an assessment model, a factuality check on the generated sequence of items based on the probability information of the sets of candidate items associated with the items of the sequence of items.

## Description

### FIELD

The present disclosure relates to a computer-implemented method for assessing reliability of outputs from machine learning models, a computer program comprising instructions for carrying out the computer-implemented method for assessing reliability of outputs from machine learning models, a computer-readable storage medium comprising instructions for carrying out the computer-implemented method for assessing reliability of outputs from machine learning models, and a data processing system for assessing reliability of outputs from machine learning models. More particularly, the present disclosure relates to LLM hallucination detection using probability distribution arithmetic.

### BACKGROUND

Large Language Models (LLMs) are a category of machine learning models capable of generating text in response to a given input, commonly referred to as a *prompt.* These models are fine-tuned to produce outputs that are both high in probability and have good human readability. For example, in response to the prompt "What is the first month of the year?", an LLM is likely to generate outputs such as "January" or "The first month of the year is January." This capability allows LLMs to provide answers, explanations, or other contextually relevant responses to a wide variety of queries.

LLMs generate text outputs by processing and concatenating smaller units known as *tokens.* Tokens can represent single characters, multi-character strings, or segments of words. A model predicts the next token in a sequence based on the context provided by preceding tokens. Rather than selecting a single token outright, LLMs calculate a probability distribution over its entire vocabulary, assigning a probability to each possible token. This distribution reflects the model's confidence in its predictions. For instance, if one token has a significantly higher probability than the rest, the model can be considered confident in that choice. Conversely, if probabilities are distributed more evenly, the model exhibits uncertainty. These probability distributions play a crucial role in determining the sequence of generated tokens.

Despite their capabilities, LLMs are prone to errors, including generating factually incorrect or fabricated information, often referred to as "hallucinations." Recent studies have highlighted the frequency of such errors, with estimates indicating that the LLM underpinning ChatGPT fabricates facts approximately 3% of the time, while another LLM developed by Google is estimated to fabricate fact up to 27% of the time. These inaccuracies can pose significant risks to individuals and businesses relying on LLM-generated information. Consequently, there is a need for technologies capable of detecting and mitigating LLM hallucinations to enhance their reliability and utility in practical applications.

### SUMMARY

In light of the above, a computer-implemented method for assessing reliability of outputs from machine learning models, a computer program comprising instructions for carrying out the computer-implemented method for assessing reliability of outputs from machine learning models, a computer-readable storage medium comprising instructions for carrying out the computer-implemented method for assessing reliability of outputs from machine learning models, and a data processing system for assessing reliability of outputs from machine learning models are provided.

It is an object of the present disclosure to assess the reliability of outputs generated by machine learning models. Another object of the present disclosure is to enhance the efficiency and reliability of machine learning models by providing a dedicated processor architecture or extending the capabilities of commonly used processor architectures through the use of dedicated software that is able to operate and perform arithmetic directly on distribution representations.

The objects are solved by the features of the independent claims. Preferred embodiments are defined in the dependent claims.

According to an independent aspect of the present disclosure, a computer-implemented method for assessing reliability of outputs from machine learning models is provided. The method includes generating, by a first machine learning model, a sequence of items, wherein each item is selected from a corresponding set of candidate items based on at least one selection criterion, wherein each candidate item of a set of candidate items is associated with probability information; and performing, by an assessment model, a factuality check on the generated sequence of items based on the probability information of the sets of candidate items associated with the items of the sequence of items.

According to some embodiments, which can be combined with other embodiments described herein, the first machine learning model is a Large Language Model (LLM).

According to some embodiments, which can be combined with other embodiments described herein, the sequence of items generated by the first machine learning model, such as the Large Language Model, is a sequence of tokens, e.g., text tokens.

According to some embodiments, which can be combined with other embodiments described herein, the factuality check includes determining at least one quality parameter for the generated sequence of items. For example, the at least one quality parameter could be a sequence coherence as investigated by research teams like Google DeepMind. This parameter assesses the factuality of items within the sequence, ensuring that the generated items align with the intended narrative or task. Other quality parameters include, but are not limited to, fluency, factual accuracy, and diversity.

According to some embodiments, which can be combined with other embodiments described herein, the factuality check includes determining a factuality score for the generated sequence of items. For example, the factuality score could be defined as a metric used to evaluate the accuracy and factual integrity of the generated sequence of items. A factuality score of 1 could indicate that the entire generated sequence is factually accurate and aligns perfectly with the reference truth. A factuality score of 0 could indicate that the sequence contains significant factual inaccuracies or is completely misaligned with the reference truth.

According to some embodiments, which can be combined with other embodiments described herein, the assessment model includes, or is, a second machine learning model.

According to some embodiments, which can be combined with other embodiments described herein, the second machine learning model is configured to quantify correctness of the generated sequence of items.

According to some embodiments, which can be combined with other embodiments described herein, the second machine learning model uses information, such as the probability information, about the set of candidate items as input and returns a factuality score as output.

According to some embodiments, which can be combined with other embodiments described herein, the factuality score is between 0 and 1. A factuality score of 1 could indicate that the entire generated sequence is factually accurate and aligns perfectly with the reference truth. A factuality score of 0 could indicate that the sequence contains significant factual inaccuracies or is completely misaligned with the reference truth.

According to some embodiments, which can be combined with other embodiments described herein, the second machine learning model is trained based on pairs of inputs and outputs to the first machine learning model that have been given a factuality score. In some embodiments, the input to the second machine learning model is sequences of sets of candidate items and associated probability values, where each set of candidate items and associated probability values is the output of the first machine learning model corresponding to the output the first machine learning model generates when generating a single token. For example, the second machine learning model can be trained with input/output pairs that look like (243: probability 0.1) or (input={(1) ["house" : probability 0.1, "dog" : probability 0.6, ...], (2) ["ran" : probability 0.5, "exploded": probability 0.01], (3) [], ...}, output = {FACTUAL}).

According to some embodiments, which can be combined with other embodiments described herein, the pairs of inputs and outputs are prompt/response pairs that have been given a factuality score. For example, the pairs of inputs and outputs to the second machine learning model can be pairs of inputs to, and outputs from, the first machine learning model, where the outputs from the first machine learning model are sets comprising one or more tokens each paired with a probability, and where the output of the first machine learning model, over multiple output tokens, have been given a factuality score.

According to some embodiments, which can be combined with other embodiments described herein, each set of candidate items output by the first machine learning model represents a probability distribution of candidate items, and the method further includes generating a distribution representation from the probability distribution of each set of candidate items. The distribution representation can be a representation of probability mass/density functions/distributions on which a processor unit can operate. In one embodiment, the distribution representations enable commonly utilized processor architectures to operate on the probability distributions of candidate items. Non-limiting exemplary methods for generating such representations from a data set are explained in WO 2022/248719 A1 and WO 2022/248714 A1.

According to some embodiments, which can be combined with other embodiments described herein, the distribution representation includes candidate item position parameters and associated candidate item probability parameters. In particular, a representation generation algorithm can be used to generate the distribution representation of the probability distributions of candidate items. In preferred embodiments, the representation generation algorithm can be configured to generate the distribution representation according to the position parameter and the probability parameter, wherein each position of the distribution representation is represented by a Dirac delta associated with a corresponding probability mass. In other words, each real number in the domain of a distribution may be described by a Dirac delta with some probability mass located at the value of the real number. As a result, the distribution representation is in the form of a sum of Dirac deltas.

According to some embodiments, which can be combined with other embodiments described herein, the distribution representation is a Telescoping Torques Representation (TTR). The Telescoping Torques Representation (TTR) builds on Dirac mixture representation and is based on the intuition that the mean value of a set of samples splits the samples into two sets with equal products of the distance of the sample from the mean and the sample probability. This allows the representation to capture the effects of unlikely, yet high-value samples even at small representation sizes.

According to some embodiments, which can be combined with other embodiments described herein, the method further includes arranging or re-arranging the candidate items of the set of candidate items based on at least one ordering criterion before performing the factuality check.

According to some embodiments, which can be combined with other embodiments described herein, the at least one ordering criterion relates to the probabilities associated with the candidate items.

According to some embodiments, which can be combined with other embodiments described herein, arranging or re-arranging the candidate items of the set of candidate items based on the at least one ordering criterion includes arranging or re-arranging the candidate items in descending order of probability, starting with the candidate item having the highest probability and proceeding to the candidate item with the lowest probability.

Alternatively, arranging or re-arranging the candidate items of the set of candidate items based on the at least one ordering criterion may include arranging or re-arranging the candidate items in ascending order of probability, starting with the candidate item having the lowest probability and proceeding to the candidate item with the highest probability.

According to some embodiments, which can be combined with other embodiments described herein, arranging or re-arranging of the candidate items of the set of candidate items includes mapping a default order of the candidate items of the set of candidate items to the distribution representation, such a Dirac delta mixture.

According to some embodiments, which can be combined with other embodiments described herein, the at least one ordering criterion relates to a position of the candidate items on a number line. In particular, the criterion for ordering may be based on how the tokens (items) are mapped to real-valued numbers (positions on the number line). The ordering of items/tokens can be designed to ensure that the resulting distribution is as smooth as possible. One possible way to achieve this quantitatively is to determine the ordering that maximizes the Shannon entropy of the rearranged distribution of positions (items/tokens) and their associated probabilities.

According to another independent aspect of the present disclosure, a computer program is provided. The computer program has instructions which, when the program is executed by a computer, cause the computer to carry out the method for assessing reliability of outputs from machine learning models according to the embodiments described in this document.

According to another independent aspect of the present disclosure, a computer-readable storage medium is provided. The computer-readable storage medium has instructions which, when the program is executed by a computer, cause the computer to carry out the method for assessing reliability of outputs from machine learning models according to the embodiments described in this document.

Preferably, the computer-readable storage medium is a non-transitory computer-readable storage (or memory) medium. The term "non-transitory computer-readable storage (or memory) medium" includes, but is not limited to, magnetic or optical media, e.g., disks, hard drives, or DVDs/CD-ROMs, volatile or non-volatile media such as RAM (e.g., SDRAM, DDR, RDRAM, SRAM, etc.), ROM, etc. The non-transitory computer-readable storage (or memory) medium may include other types of non-transitory memory as well or combinations thereof.

According to another independent aspect of the present disclosure, a data processing system for assessing reliability of outputs from machine learning models is provided. The data processing system includes one or more processors configured to generate, using a machine learning model, a sequence of items, wherein each item is selected from a corresponding set of candidate items based on at least one selection criterion, wherein each candidate item of a set of candidate items is associated with probability information; and perform, using an assessment model, a factuality check on the generated sequence of items based on the probability information of the sets of candidate items associated with the items of the sequence of items.

According to some embodiments, which can be combined with other embodiments described herein, the one or more processors of the data processing system are configured to perform the computer-implemented method for assessing reliability of outputs from machine learning models according to the embodiments described in this document.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: illustrates a schematic view of a conventional processor unit;
- FIG. 2: illustrates a schematic view of a processor unit according to embodiments of the present disclosure;
- FIG. 3: shows a per-token distribution of a Large Language Model;
- FIG. 4: shows a flowchart of a method for assessing reliability of outputs from machine learning models according to embodiments of the present disclosure;
- FIG. 5: illustrates the construction of an uncertainty representation using Telescoping Torques Representation (TTR) according to embodiments of the present disclosure;
- FIG. 6: illustrates a bit-level layout of an uncertainty representation according to embodiments of the present disclosure; and
- FIG. 7: shows a re-arranged per-token distribution of a Large Language Model according to embodiments of the present disclosure.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

As used herein, the term "uncertainty tracking" (or uncertainty propagation) is the process of monitoring how uncertainties in data affect the outputs of sequences of arithmetic operations that act on the data. For a given data item, such as a measurement, the term uncertainty quantification (UQ) is usually used to refer to the process of quantifying the uncertainty of that single data item.

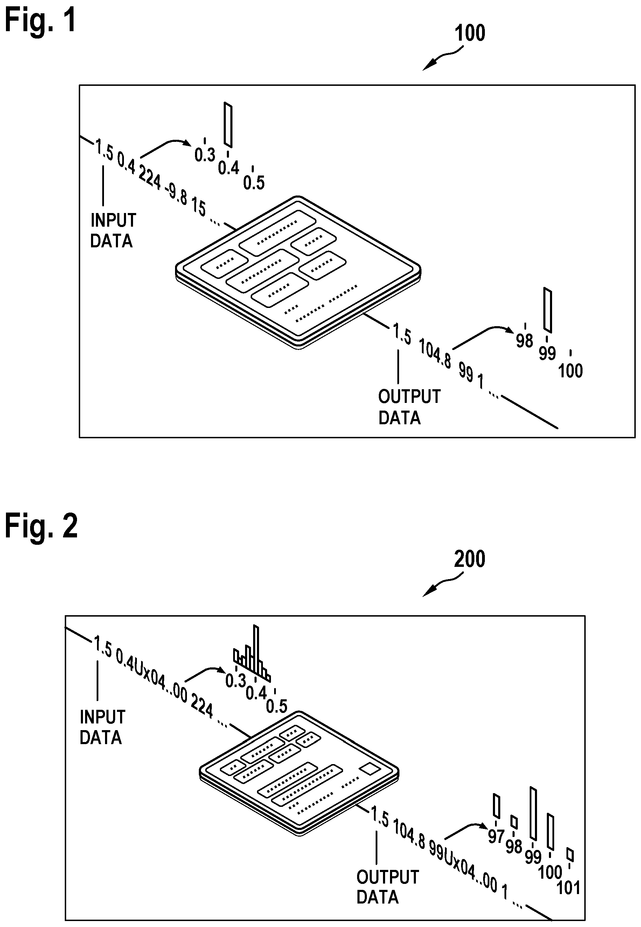

FIG. 1 illustrates a schematic view of a conventional processor unit 100.

A conventional processor unit 100 takes as input integer and floating-point values and performs operations (e.g., ADD, SUBSTRACT, MULTIPLY, XOR, etc.) on these data. The results of these operations are other integers or floating-point values.

Uncertainties in data, such as those used in machine learning applications, are not uncommon, but the conventional processor unit 100 can only deal with integer and floating-point values which are certain and unambiguous. Therefore, the software running over the conventional processor unit 100 eliminates the uncertainties by averaging the variations across readings into a single number, to get the data into a form that the conventional processor unit 100 can handle, before feeding the averaged data into subsequent steps.

In one exemplary embodiment of the present disclosure, the conventional processor unit 100 according to FIG. 1 can be extended without any hardware re-configuration using the concept of representation described later, particularly the so-called Telescoping Torques Representation (TTR). TTR enables the embodiments of the present disclosure on the conventional processor unit 100 without any hardware re-configuration.

FIG. 2 illustrates a schematic view of a processor unit 200 according to embodiments of the present disclosure, which is capable of processing and operating on probability distributions. The processor unit 200 is a dedicated architecture, such as the architecture disclosed in WO 2022/248719 A1 operating on a representation according to WO 2022/248719 A1 and WO 2022/248714 A1.

The processor unit 200 of the present disclosure can take in as input the same kinds of integer and floating-point values and perform the same kinds of operations (e.g., ADD, SUBSTRACT, MULTIPLY, XOR, etc.) as the conventional processor unit. In addition to that, the values taken as input include additional information about distributions associated with each value, and the processor unit 200 may also, in some embodiments, enable a number of additional operations that act on the distribution information (e.g., BAYESLAPLACE, DISTFROMSAMPLES, etc.).

In some embodiments, the processor unit 200 includes additional and/or specifically configured hardware to enable the uncertainty tracking of the present disclosure. For example, the processor unit 200 may include a floating-point register file. The floating-point register file may include a first register file for storing particle data items and a second register file for storing distribution data. The distribution data represents distributions (e.g., TTR) that encode the uncertainty associated with the corresponding particle data items in the first register file.

A first arithmetic logic unit (ALU) can be configured to perform arithmetic operations on particle data items selected from the first register file, while a second arithmetic logic unit (ALU) can be configured to perform arithmetic operations on distribution data selected from the second register file. For example, the first arithmetic logic unit may execute an arithmetic operation (e.g., addition, subtraction, multiplication, or division) on two floating-point particle data items selected from the first register file and output the result. Simultaneously, the second arithmetic logic unit may execute the same arithmetic operation on two corresponding distribution data items selected from the second register file, which are associated with the particle data items used in the first arithmetic operation. The second arithmetic logic unit then outputs the result.

Notably, the arithmetic operation applied to the distribution data in the second register file is identical to the arithmetic operation applied to the particle data items in the first register file. Consequently, the output of the second arithmetic logic unit represents updated distributional data that quantifies the uncertainty associated with the result of the arithmetic operation performed on the particle data items.

A detailed description of an exemplary embodiment of the processor unit 200 is provided in WO 2022/248719 A1.

In some embodiments, the processor unit 200 of the present disclosure can be implemented as a virtualization layer. By moving the uncertainty tracking into a virtualization layer below the user's software, applications can be significantly simplified. Furthermore, the implementation of the processor unit 200 as a virtualization layer means users can benefit from advances in the technology as it evolves, without needing to rewrite the user's software.

The embodiments of the present disclosure utilize the processor unit 200 to process distributions, such as per-token distributions, to assess the accuracy of the output generated by a machine learning model, as will be further explained below. While the description is provided with reference to a Large Language Model (LLM), it should be understood that the present disclosure is not limited to LLMs and can be applied to other machine learning models capable of generating and outputting a sequence of items associated to probability information, such as text tokens.

Large Language Models (LLMs) are a type of machine learning model designed to process and generate human-like text. These models are trained on datasets containing text from a variety of sources, allowing them to learn patterns, relationships, and contextual nuances in language. When presented with an input, often called *a prompt,* an LLM generates a sequence of text that is both highly likely based on patterns it has learned during training and has good human readability. For example, if given the prompt "What is the capital of France?" the model is likely to generate a response such as "Paris" or "The capital of France is Paris."

The process of generating text involves several stages, with one component being the computation of what is known as a *per-token distribution.* In particular, LLMs break down text into smaller units called *tokens.* A token can represent a single character, a sequence of characters, or even parts of a word, depending on how the model's tokenizer processes the input text.

When an LLM generates a response, it does not immediately select a single token to append to the sequence. Instead, it calculates a set of scores for every token in its vocabulary, producing what is referred to as *logits.* These logits are raw, unnormalized values that represent the model's assessment of how likely each token is to follow the sequence so far. To convert these logits into probabilities, the model applies a mathematical function called *softmax.* This operation normalizes the logits, producing a probability distribution over all possible tokens. This probability distribution is the per-token distribution, which represents the likelihood of each token being the next in the sequence.

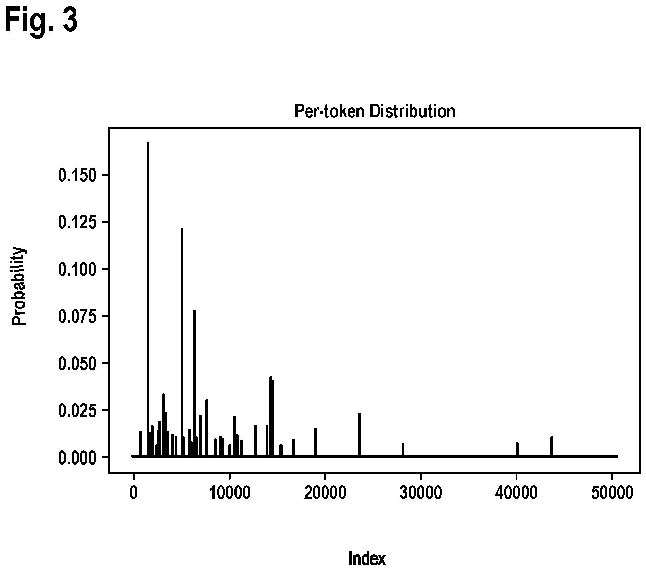

FIG. 3 shows an exemplary per-token distribution. The vocabulary index of the per-token distribution refers to the specific position or numerical identifier assigned to each token in the model's vocabulary. The vocabulary is a predefined set of all possible tokens that the model can generate or interpret, and each token is associated with a unique index for referencing. The per-token distribution assigns a probability value to each index in the vocabulary. The distribution is essentially a vector of size N, where each element corresponds to the probability of the token associated with that vocabulary index being the next token in the sequence.

The per-token distribution is central to the generation process, as it determines the model's level of certainty about its predictions. If the distribution is sharply peaked, with one token having a high probability and the rest having near-zero probabilities, it indicates that the model is confident in its choice. Conversely, if the distribution is flatter, with several tokens having comparable probabilities, it reflects uncertainty in the model's next token prediction. This variability in the distribution can influence the diversity and consistency of the text the model generates.

Once the per-token distribution is computed, the model uses it to select the next token based on at least one selection criterion. The specific token selection process can vary depending on the application. The model may pick the token with the highest probability for deterministic outputs, or it might sample from the distribution for more varied and creative responses. Adjustments to the distribution, such as applying temperature scaling to make it sharper or flatter, can further refine the nature of the generated text.

In essence, the per-token distribution is a probabilistic representation of all possible continuations at each step of the generation process. It reflects the model's understanding of context and provides the flexibility to produce both predictable and diverse outputs. By continually computing and updating this distribution for each token in the sequence, LLMs are able to construct coherent and contextually relevant text, demonstrating their capacity for complex language understanding and generation.

The present disclosure introduces an assessment model, such as a machine learning model, configured to evaluate the factual accuracy of outputs generated by a Large Language Model (LLM) in response to a given prompt. The assessment model achieves this by analyzing the probability distributions associated with the individual tokens generated by the LLM, particularly the per-token distributions. By utilizing the sequence of these distributions, the present disclosure determines whether the LLM is more likely (or less likely) to produce an output that is factually incorrect.

To provide this functionality, the present disclosure could take advantage of the computational capabilities of the processor unit illustrated in FIG. 2, which can perform operations directly on probability distributions. This approach addresses a significant inefficiency in current methods, such as Monte Carlo-based beam search, which are computationally expensive and suboptimal for real-time or large-scale applications. The method disclosed herein offers a practical and scalable solution for evaluating the veracity of LLM-generated outputs, overcoming the limitations and inefficiencies of existing approaches, such as Monte Carlo-based beam search.

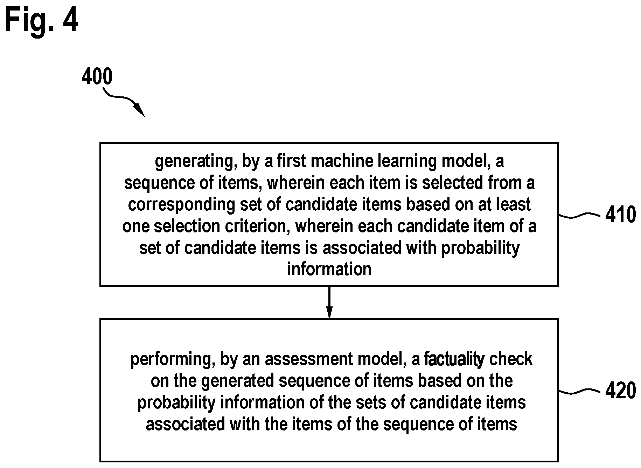

FIG. 4 shows a flowchart of a method 400 for assessing reliability of outputs from machine learning models according to embodiments of the present disclosure.

The method 400 includes generating, by a first machine learning model, a sequence of items, wherein each item is selected from a corresponding set of candidate items based on at least one selection criterion, wherein each candidate item of a set of candidate items is associated with probability information (Block 410); and performing, by an assessment model, a factuality check on the generated sequence of items based on the probability information of the sets of candidate items associated with the items of the sequence of items (Block 420).

The first machine learning model can be a Large Language Model (LLM) as described above, with the generated sequence of items corresponding to a sequence of text tokens. However, it should be understood that the present disclosure is not limited to LLMs and can be applied to other machine learning models capable of generating and outputting a sequence of items, such as text tokens.

In some embodiments, the assessment model includes, or is, a second machine learning model, particularly a trained machine learning model, configured to quantify correctness of the generated sequence of items. For example, the second machine learning model could use information about the set of candidate items as input and return a factuality score as output, wherein the factuality score is between 0 and 1. A factuality score of 1 could indicate that the entire generated sequence is factually accurate and aligns perfectly with the reference factuality or reference truth. A factuality score of 0 could indicate that the sequence contains significant factual inaccuracies or is completely misaligned with the reference factuality or reference truth.

In some embodiments, the second machine learning model is trained based on input/output pairs that have been given a factuality score, wherein the input corresponds to candidate items and associated probability values, and the output corresponds to generated sequences of items. For example, the input/output pairs could be prompt/response pairs that have been given a factuality score.

Each candidate item within a given set of candidate items is associated with corresponding probability information, such that the set collectively represents the likelihood of each token being the next in the sequence. In other words, each set of candidate items represents a probability distribution over potential candidates for the next item in the sequence (per-token distribution, see FIG. 3). The embodiments of the present disclosure utilize the processor unit of FIG. 2 to process probability distributions and assess the accuracy of generated sequences of items. To facilitate this, the probability distribution of each set of candidate items may be transformed into a respective distribution representation, enabling the processor unit to perform calculations, such as arithmetic operations (e.g., ADD, SUBSTRACT, MULTIPLY, XOR, etc.).

A representation generation algorithm can be used to generate the distribution representation from the per-token distribution. In preferred embodiments, the representation generation algorithm can be configured to generate the distribution representation according to a position parameter and a probability parameter, wherein each position of the distribution representation is represented by a Dirac delta associated with a corresponding probability mass. In other words, each real number in the domain of the per-token distribution may be described by a Dirac delta with some probability mass located at the value of the real number.

It should be noted that this representation of a distribution in terms of Dirac deltas within its domain is different from that of a probability mass function (PMF), where the domain of the distribution is by definition discrete-valued and integrals can be replaced with sums. Because the Dirac delta distribution is not a function but rather is a distribution, the representation of distributions as a collection of Dirac deltas is also different from the concept of a probability density function (PDF). In general, one can call a representation made up of Dirac deltas that integrate to 1.0 (i.e., their probability masses sum up to 1.0) as probability density distribution (PDD) which is a generalization of a probability density function (PDF) (i.e., a PDF is a PDD but not vice versa).

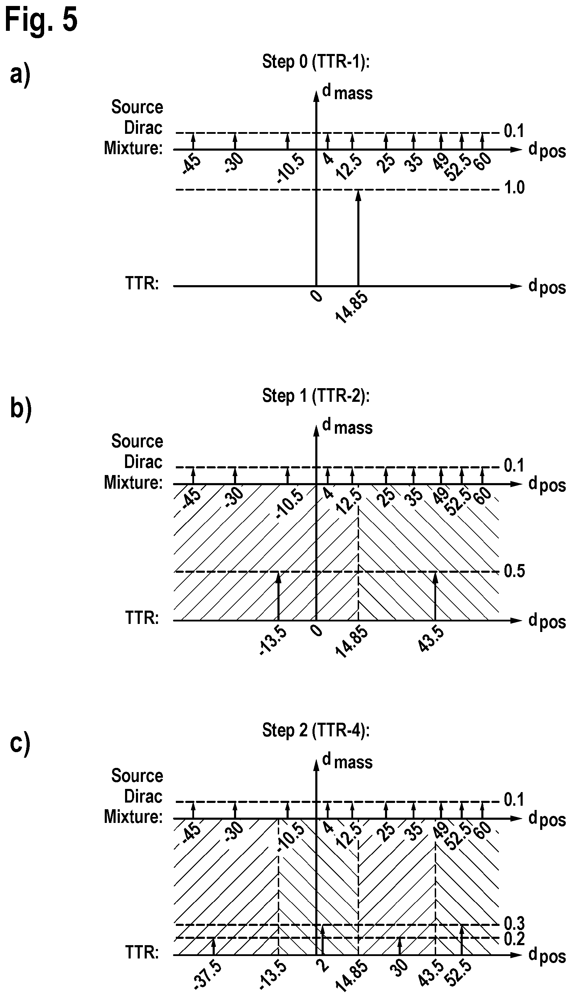

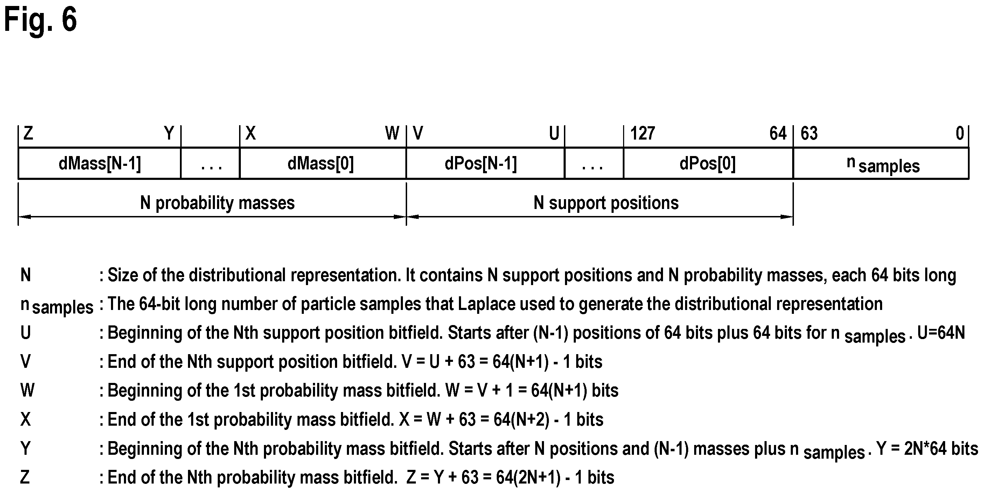

The so-called Telescoping Torques Representation (TTR) of preferred embodiments of the present disclosure is described below with reference to FIGs. 5 and 6 as an example of a distribution representation of a per-token distribution in terms of Dirac deltas. It is to be understood that the present disclosure is not limited thereto and that other methods may also be used to construct representations, such as Moment-Quantized Histogram Representation (MQHR) described in WO 2022/248714 A1.

The Telescoping Torques Representation (TTR) builds on Dirac mixture representation of a set of samples of a data set, and is based on the intuition that the mean value of a set of samples splits the samples into two sets with equal products of the distance of the sample from the mean and the sample probability. This allows the representation to capture the effects of unlikely, yet high-value samples even at small representation sizes.

Let *src_{DM}* be a Dirac delta mixture representing a set of samples from a random variable *X.* Let *N* be a positive integer power of two. *src_{DM}* is converted to a distribution representation of size *N* using a recursive conversion algorithm of *log₂ N* steps. The number of steps is what is referred to as the "order" of the distribution representation. At each step, the algorithm splits a source Dirac mixture on its mean value *m,* creating two Dirac mixtures, which are the inputs of two new calls to the algorithm.

FIG. 5 illustrates an example for *N =* 4, starting from a *src_{DM}* of 10 data samples (e.g., particles). The top part of FIG. 5 illustrates the source Dirac mixture. The mixture consists of 10 Dirac deltas, each one positioned at the value of each unique source sample. The mass of each Dirac delta is 0.1, equal to the relative frequency of each data sample (e.g., particle).

In step 0 of FIG. 5(a), the conversion algorithm creates the zeroth-order distribution representation of *src_{DM},* which is a single Dirac delta located at the mean (*m =* 14.85) of *src_{DM}* (i.e., *dₚₒₛ*[0] *=* 14.85) with probability mass equal to the sum of the probability masses of all Dirac deltas in *src_{DM}* (*dₘₐₛₛ*[0] *=* 1.0).

In step 1 of FIG. 5(b), the conversion algorithm splits *src_{DM}* into two mixtures (each with five Dirac deltas in this example) using *m* as a boundary, and repeats the process for each sub-mixtures. FIG. 5(b) illustrates the first-order distribution representation of *src_{DM},* which has two Dirac deltas positioned at the mean value of the Dirac mixture splits of step 0, each one with probability mass equal to 0.5.

In step 2 of FIG. 5(c), the conversion process repeats, further splitting the sub-mixtures of step 1, into two parts. This results in four sub-mixtures and four Dirac deltas that represent them and form the second-order distribution representation of *src_{DM}.* FIG. 5(c) illustrates that the split in step 1 results in sub-mixtures that each contain a different number of source particle samples. Step 2 represents these sub-mixtures with Dirac deltas with unequal probability masses. FIG. 5(c) illustrates that the outcome Dirac deltas retain the property of equal probability torque on the two sides of the mean value of the source Dirac mixture (*m* = 14.85).

A Dirac mixture requires only a series of positions *xᵢ* and probability masses *pᵢ* for its description. It should be noted that the terms "position" and "support position" can be used interchangeably in this context. For a random variable d, its Dirac mixture of size *N* is an array of 2*N* floating-point values. For the ith Dirac delta of the mixture, the position *dₚₒₛ*[*i*] and probability mass *dₘₐₛₛ*[*i*] are stored.

FIG. 6 illustrates a one bit-level layout for such a Dirac mixture. The set of bits in the layout allows a concise in-processor representation for the per-token distribution.

The above sum-of-Dirac-deltas representation may be described in the form of a set of tuples (i.e., a set of *n k*-tuples). A reference herein to a "tuple" may be considered to include a reference to a data structure consisting of multiple parts defining an ordered set of data constituting a record, as is commonly understood in the art. In mathematics, a tuple is a finite sequence of elements such as a sequence of *k* elements, where *k* is a non-negative integer (e.g., *k*=2).

In a preferred embodiment of the present disclosure, each tuple of the set of tuples is a real or integer value (i.e., the position parameter) paired with a probability (i.e., the probability mass, which is a real number between 0 and 1), and the probabilities in the set of tuples add up to 1. Accordingly, each tuple provides a data structure within which distributional information is encoded. These tuples are distinct from the probability distribution itself.

Tuples other than those described above may be used in further embodiments. For example, (*m*+1)-tuples could be defined where the first *m* numbers tell the *m*-dimensional position of a Dirac delta, and the last number is the probability mass of the Dirac delta.

The present disclosure is not limited to the above sum-of-Dirac-deltas representation, and other representations can be constructed from a data set, such as a per-token distribution. Another example of such an uncertainty representation is an interval-based representation (i.e., a piecewise constant approximation of the probability density function, which is equivalent to the linear approximation of the CDF) having n intervals and k = 3 (start of interval, end of interval, density value).

Yet another example is a mixture of these, e.g., consider a distribution density with half of its mass in a uniform [0, 1] (thus, exactly represented by the 3-tuple (0, 1, 0.5)) and the other half is degenerate at the value 2 (thus, exactly represented by the 2-tuple (2, 0.5)). A degenerate distribution can be understood as a probability distribution that has a non-trivial probability mass (i.e., greater than 0) concentrated in a lower dimensional manifold than the dimension of the range of the corresponding random variable (a.k.a., the domain of the distribution). In particular, any 1-dimensional PDD that contains a Dirac delta with probability mass greater than 0 is a degenerate distribution (which has nontrivial mass concentrated at a point, a 0-dimensional manifold).

The representations described above make it unnecessary to generate large numbers of samples in order to sample the tails of a distribution (i.e., to converge) in the terminology of Monte Carlo methods. In particular, the representation (and subsequent computation using it) makes irrelevant the whole idea of having to keep running Monte Carlo iterations until one has sampled far enough out into the tails (of the inputs as well as of the results).

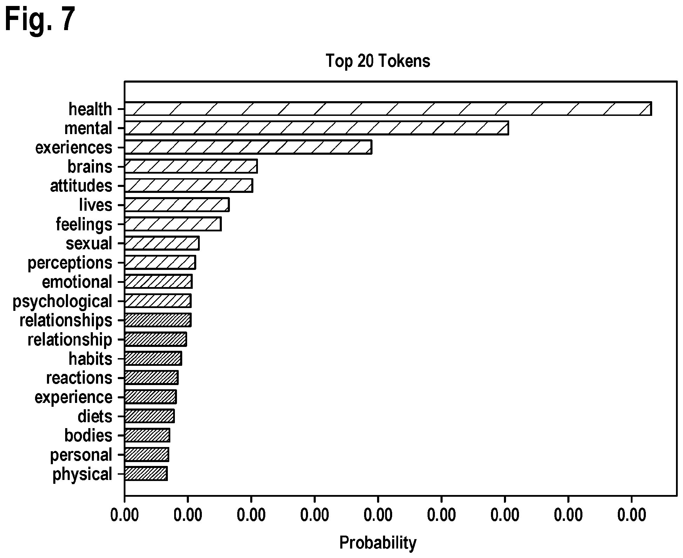

In some embodiments, the arrangement of values within the support of the per-token distributions may be modified from the default ordering of tokens in their support space to an ordering that facilitates more efficient representation using a distribution representation, such as Dirac mixtures. By default, per-token distributions are defined based on a pre-determined ordering of tokens in the vocabulary. Under this ordering, the distributions are typically "spiky", as illustrated in FIG. 3. However, by reordering the vocabulary indices, for instance, according to their probability, the resulting distribution transitions into a smooth decay pattern, as shown in FIG. 7. For example, the candidate items can be reordered in descending order of probability, starting with the candidate item having the highest probability and proceeding to the candidate item with the lowest probability. Alternatively, the candidate items could be reordered in ascending order of probability, starting with the candidate item having the lowest probability and proceeding to the candidate item with the highest probability. This transformation allows for more efficient processing and representation of the distributions.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A computer-implemented method for assessing reliability of outputs from machine learning models, comprising:
- generating, by a first machine learning model, a sequence of items, wherein each item is selected from a corresponding set of candidate items based on at least one selection criterion, wherein each candidate item of a set of candidate items is associated with probability information; and
- performing, by an assessment model, a factuality check on the generated sequence of items based on the probability information of the sets of candidate items associated with the items of the sequence of items.

2. A computer-implemented method of claim 1, wherein the first machine learning model is a Large Language Model, and wherein the generated sequence of items is a sequence of text tokens.

3. A computer-implemented method of claim 1 or 2, wherein the factuality check includes determining at least one quality parameter for the generated sequence of items.

4. A computer-implemented method of any one of claims 1 to 3, wherein the factuality check includes determining a factuality score for the generated sequence of items.

5. A computer-implemented method of any one of claims 1 to 4, wherein the assessment model includes, or is, a second machine learning model.

6. A computer-implemented method of claim 5, wherein the second machine learning model is configured to quantify correctness of the generated sequence of items.

7. A computer-implemented method of claim 5 or 6, wherein the second machine learning model uses information about the set of candidate items as input and returns a factuality score as output, in particular wherein the factuality score is between 0 and 1.

8. A computer-implemented method of claim 7, wherein the second machine learning model is trained based on input/output pairs to the first machine learning model that have been given a factuality score, in particular wherein the input/output pairs are prompt/response pairs that have been given a factuality score.

9. A computer-implemented method of any one of claims 1 to 8, wherein each set of candidate items represents a probability distribution of candidate items, and wherein the method further includes:
- generating a distribution representation from the probability distribution of each set of candidate items based on the probability information of each candidate item, wherein the distribution representation is in the form of a sum of Dirac deltas, in particular wherein the distribution representation is a Telescoping Torques Representation.

10. A computer-implemented method of any one of claims 1 to 9, further including arranging or re-arranging the candidate items of the set of candidate items based on at least one ordering criterion before performing the factuality check.

11. A computer-implemented method of claim 10, wherein the at least one ordering criterion relates to the probability information associated with the candidate items or a position of the candidate items on a number line.

12. A computer-implemented method of claim 10 or 11, wherein the arranging or re-arranging of the candidate items of the set of candidate items includes mapping a default order of the candidate items to a distribution representation, in particular Dirac delta mixtures.

13. A computer program comprising instructions which, when the program is executed by a computer, cause the computer to carry out the method of any one of claims 1 to 12.

14. A computer-readable storage medium comprising instructions which, when the program is executed by a computer, cause the computer to carry out the method of any one of claims 1 to 12.

15. A data processing system for assessing reliability of outputs from machine learning models, comprising one or more processors configured to:
- generate, using a machine learning model, a sequence of items, wherein each item is selected from a corresponding set of candidate items based on at least one selection criterion, wherein each candidate item of a set of candidate items is associated with probability information; and
- perform, using an assessment model, a factuality check on the generated sequence of items based on the probability information of the sets of candidate items associated with the items of the sequence of items.
